# EUROPEAN PATENT SPECIFICATION

(11) **EP 1 990 469 B1**
(45) Date of publication and mention of the grant of the patent: **02.06.2010**
(21) Application number: 07714461.6
(22) Date of filing: 19.02.2007
(51) Int. Cl.: D21F 3/08, F16C 13/00

(54) **CERAMIC-RESIN COMPOSITE ROLL AND METHOD FOR PRODUCING SAME**
KERAMIK-HARZ-VERBUNDROLLE UND HERSTELLUNGSVERFAHREN DAFÜR
ROULEAU COMPRENANT UN COMPOSITE RESINE-CERAMIQUE ET SON PROCEDE DE PRODUCTION

(30) Priority: 27.02.2006 JP 2006051080
(43) Date of publication of application: 12.11.2008
(73) Proprietor: YAMAUCHI CORPORATION, Hirakata-shi, Osaka 573-1132 (JP)
(72) Inventor: SHIMAZAKI, Hiroya, Hirakata-shi, Osaka 5731132 (JP)
(74) Representative: Müller - Hoffmann & Partner
(86) International application number: PCT/JP2007/052935
(87) International publication number: WO 2007/097272

(56) References cited:
- EP-A- 0 481 321
- WO-A-00/48747
- WO-A-98/56984
- JP-A- 2001 131 730
- JP-A- 2002 088 462
- JP-A- 2003 183 806
- JP-A- 2003 183 806
- JP-B2- 07 111 036

## Description

### TECHNICAL FIELD

The present invention relates to a ceramic-resin composite roll that can be used in the various kinds of industries and more particularly, to a ceramic-resin composite roll that is superior in impact resistance, abrasion resistance, chemical resistance and corrosion resistance and can be used as a paper making roll, and its production method.

### BACKGROUND ART

A ceramic roll having a thermally sprayed ceramic film is used in a pressing part, a coating part, and a wiring part in a paper making process. Since the ceramic particles in the thermally sprayed ceramic film are fused and bonded to each other strongly, the ceramic roll is superior in strength and abrasion resistance in general as a whole.

Meanwhile, since there are spaces among the fused and bonded ceramic particles in the thermally sprayed ceramic film, chemicals and water contained in a pulp solution are likely to penetrate into a roll surface. When the chemicals and water penetrate into the roll, the thermally sprayed ceramic film and the roll core are likely to be corroded, which causes the roll to be damaged. Therefore, although a sealing process is performed on the surface of the ceramic roll in general, its sealing effect is not sufficient at the present.

Japanese Examined Patent Publication No. 7-111036 (corresponding to EP 0 481 321 A) discloses a production method of a press roll for a paper making machine in which a foundation layer is formed of a metal material on the outer circumference of a metal core body and a ceramic layer is formed on the outer circumference of the foundation layer. As shown in Fig. 4 schematically, the press roll disclosed in this document comprises a roll core 11, a foundation layer 12 formed on the outer circumference of the roll core 11, and a ceramic layer 13 formed on the outer circumference of the foundation layer 12. The ceramic layer 13 is formed by thermally spraying ceramic powder. In addition, an organic polymer material is coated on the surface layer of the ceramic layer 13 to form an organic polymer layer 15 penetrating in the spaces among ceramic particles 14. According to the Japanese Examined Patent Publication No. 7-111036, it is preferable that 1/4 to 1/2 parts of the thickness of the ceramic layer 13 from the surface thereof is filled with the organic polymer material.

Japanese Unexamined Patent Publication No. 6-81292 discloses a press roll in which a plastic-ceramic mixture sprayed film or plastic-cermet mixture sprayed film is formed on a mother material surface. According to this document, the whole of the thermally sprayed film can be formed of the mixture of plastic and ceramic or the mixture of plastic and cermet.

According to the press roll disclosed in the Japanese Examined Patent Publication No. 7-111036, the organic polymer material is coated on the surface layer of the thermally sprayed ceramic film, and the spaces among the ceramic particles of the surface layer is filled with the organic polymer material. However, it has been found that the impact resistance, abrasion resistance, chemical resistance and corrosion resistance are not sufficiently provided only by filling the surface layer of the thermally sprayed ceramic film with the organic polymer material. In addition, according to the press roll disclosed in the Japanese Examined Patent Publication No. 7-111036, in the case where the organic polymer material penetrating in the spaces among the ceramic particles is an epoxy resin, even when the epoxy resin having a low viscosity is used, since it takes time to impregnate the film with the resin because the press roll is large in size, the resin is hardened during the impregnating process. Thus, it was difficult to impregnate the thermally sprayed ceramic film with the resin sufficiently. In addition, when the organic polymer material is diluted with a solvent, after the solvent is removed at the time of hardening, the porosity of the thermally sprayed film becomes high, so that the impact resistance, abrasion resistance, chemical resistance and corrosion resistance are not high.

According to the press roll disclosed in the Japanese Unexamined Patent Publication No. 6-81292, the film is formed by thermally spraying the mixture material of plastic and ceramic or the mixture material of plastic and cermet. In this case, even when the mixture material is used, since the voids are generated due to spraying, sufficient sealing effect cannot be provided. In addition, when the mixture material is thermally sprayed, since the plastic intervenes in not only the voids among the ceramic particles but also in a bonded part among the ceramic particles, the fused bonding of the ceramic particles becomes insufficient and the ceramic particles are likely to be removed, so that the sprayed film is rather inferior in strength to the ceramic.

### DISCLOSURE OF THE INVENTION

The present invention was made in order to solve the above problem and it is an object of the present invention to provide a ceramic-resin composite roll superior in impact resistance, abrasion resistance, chemical resistance and corrosion resistance, and its production method.

This object is achieved by a ceramic-resin composite roll according to claim 1 and a production method of a ceramic-resin composite roll according to claim 4. The dependent claims define further embodiments.

A ceramic-resin composite roll according to the present invention comprises a metal roll core, a foundation layer formed on the outer circumferential surface of the metal roll core, and a thermally sprayed ceramic film formed on the outer circumferential surface of the foundation layer. The thermally sprayed ceramic film includes a ceramic particle layer in which adjacent ceramic particles are fused and bonded to each other, and a resin layer penetrating into the spaces among the ceramic particles from the surface of the ceramic particle layer to the surface of the foundation layer.

According to the above constitution, since the ceramic particles in the thermally sprayed ceramic film are fused and bonded to each other strongly, strength and abrasion resistance that are properties of the thermally sprayed ceramic film can be maintained. Furthermore, the resin penetrating in the spaces among the ceramic particles over the whole thickness of the thermally sprayed film functions as a sealing member and a reinforcing member. Therefore, since a composite material of the fused and bonded ceramic particles and the resin penetrating in the ceramic particles is formed over the whole thermally sprayed film from the surface of the thermally sprayed film to the foundation layer, the impact resistance and the abrasion resistance of the roll is improved and since the roll is completely sealed to the foundation layer, the chemical resistance and the corrosion resistance thereof are improved.

The resin forming the resin layer is a thermosetting resin such as an epoxy resin and urethane resin. Especially, when the epoxy resin is used, the impact resistance, abrasion resistance, chemical resistance and corrosion resistance of the ceramic-resin composite roll are improved.

A production method of a ceramic-resin composite roll comprises the following steps.
(A) A foundation layer forming step of forming a foundation layer on the outer circumferential surface of a metal roll core.
(B) A ceramic spraying step of thermally spraying ceramic particles on the outer circumferential surface of the foundation layer to form a ceramic particle layer in which adjacent ceramic particles are fused and bonded to each other.
(C) A resin impregnating step of impregnating spaces among the ceramic particles of the ceramic particle layer with a thermosetting liquid resin.
(D) A resin hardening step of hardening the liquid resin by heating the whole roll after the resin impregnating step.

According to the above method, the ceramic spraying step and the resin impregnating step are separately performed. More specifically, since only the ceramic material is thermally sprayed unlike the Japanese Unexamined Patent Publication No. 6-81292 in which the ceramic-resin mixture is thermally sprayed, the ceramic particles are fused and bonded strongly to each other.

Preferably, the ceramic particles are thermally sprayed by a water-stabilized plasma spraying method. According to the water-stabilized plasma spraying method, since it is higher in calorific value than that of the gas plasma spraying method, the ceramic particles are strongly bonded to each other, so that the film can be superior in strength. In addition, according to the water-stabilized plasma spraying method, since particles having a large diameter can be thermally sprayed as compared with the gas plasma spraying method, the spaces among the ceramic particles can be large and the liquid resin can easily penetrate.

Furthermore, according to the above method, since the step of hardening the liquid resin by heating the whole roll is performed separately from the resin impregnating step, the resin whose hardening speed is slow and whose hardening temperature is high can be selected. Therefore, the liquid resin can be prevented from being hardened during the resin impregnating step, so that the thermally sprayed film can be sufficiently impregnated with the resin from its surface to the foundation layer.

In the resin impregnating step, the thermosetting liquid resin penetrates into the spaces among the ceramic particles from the surface of the ceramic particle layer to the surface of the foundation layer. Thus, the sealing effect of the thermally sprayed ceramic film can be considerably improved and the chemical resistance and the corrosion resistance of the ceramic-resin composite roll can be improved. In addition, since the resin layer is continuously formed so as to fill the spaces among the ceramic particles from the surface of the thermally sprayed ceramic film to the foundation layer, the resin serves as a reinforcing member of the thermally sprayed film, so that the impact resistance and the abrasion resistance of the ceramic-resin composite roll can be improved.

It is preferable that the resin hardening step is performed by setting and heating the whole resin-impregnated roll in a heating furnace. Thus, since the impregnated resin can be uniformly and surely hardened, the ceramic-resin composite can improve the strength of the roll.

### BRIEF DESCRIPTION OF DRAWINGS

Fig. 1 is a sectional view showing the essential part of a ceramic-resin composite roll according to one embodiment of the present invention;
Fig. 2 is an enlarged sectional view schematically showing the essential part of the ceramic-resin composite roll according to one embodiment of the present invention;
Fig. 3 is views showing a production method of the ceramic-resin composite roll according to the present invention step by step; and

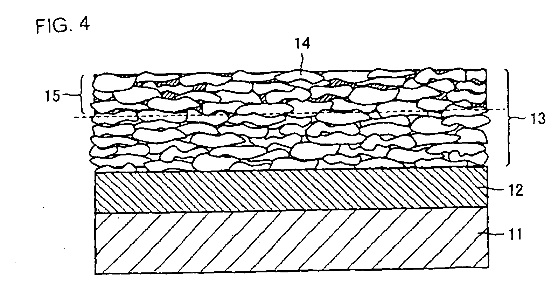

Fig. 4 is an enlarged sectional view schematically showing a conventional ceramic roll.

### BEST MODE FOR CARRYING OUT THE INVENTION

Embodiments of the present invention will be described hereinafter.

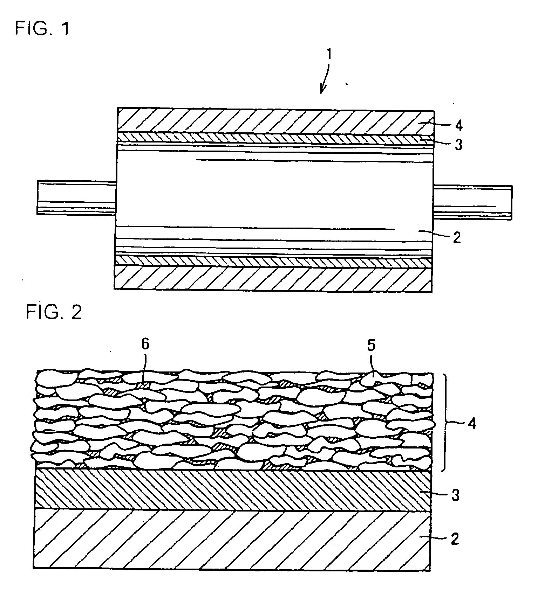

Fig. 1 is a sectional view showing the essential part of a ceramic-resin composite roll according to one embodiment of the present invention. Fig. 2 is an enlarged sectional view showing the essential part of the roll shown in Fig. 1 in detail. A ceramic-resin composite roll 1 comprises a metal roll core 2, a foundation layer 3 formed on the outer circumferential surface thereof and a thermally sprayed ceramic film 4 formed on the outer circumferential surface thereof. The roll 1 can be preferably used as a paper making roll. According to the size of the whole roll 1, its diameter is 0.4 to 2m, and its surface length (the length of the roll surface that does not include the length of a shaft projecting to both sides) is 2 to 10m.

The roll core 2 is formed of iron, stainless steel, copper, brass and the like. The foundation layer 3 is formed of a nickel-chrome alloy or a nickel-chrome-aluminum alloy, and it is provided to bond and integrate the roll core 2 and the thermally sprayed film 4 and to prevent the corrosion of the roll core 2. The thickness of the foundation layer 2 is about 100 to 800 µm.

The thermally sprayed ceramic film 4 comprises a ceramic particle layer in which adjacent ceramic particles 5 are fused and bonded to each other, and a layer of a resin 6 penetrating into the spaces among the ceramic particles 5 from the surface of the ceramic particle layer to the surface of the foundation layer 3. That is, the thermally sprayed ceramic film 4 is formed of a composite material of the fused and bonded ceramic and the resin, so that it contains the fused and bonded ceramic particles 5 formed by thermally spraying a ceramic material only, and the resin 6 penetrating into the spaces among the ceramic particles 5. The fused and bonded ceramic particles 5 are continuously provided from the surface of the thermally sprayed film 4 toward the foundation layer 2. In addition, the resin 6 is also continuously provided among the ceramic particles 5 from the surface of the thermally sprayed ceramic film 4 to the foundation layer 3 so as to fill the spaces among the ceramic particles.

The ceramic material includes gray alumina (97%Al₂O₃-3%TiO₂), white alumina (Al₂O₃), titania (TiO₂), alumina-titania (Al₂O₃-TiO₂), chromia (CrO₂), zirconia (ZrO₂), zirconia-yttria (ZrO₂-Y) and the like. These can be used alone or mixed. As described above, the resin 6 is preferably a thermosetting resin, especially an epoxy resin.

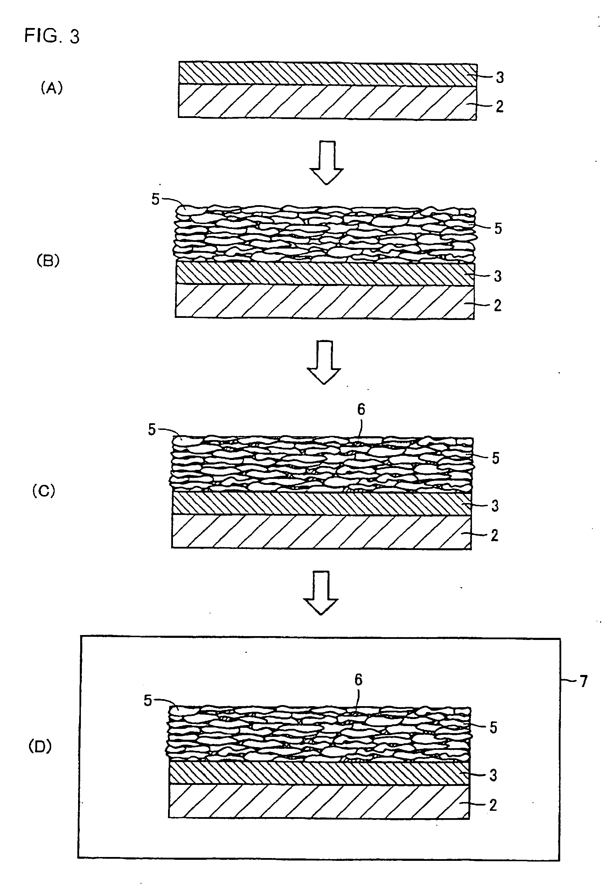

Next, a description will be made of a production method of the ceramic-resin composite roll according to one embodiment of the present invention. As shown in Fig. 3, the production method of the ceramic-resin composite roll comprises a foundation layer forming step (A), a ceramic spraying step (B), a resin impregnating step (C), and a resin hardening step (D).

First, the foundation layer 3 is formed on the outer circumferential surface of the roll core 2 in the foundation layer forming step. The foundation layer 3 can be formed by arc spraying, frame spraying and plasma spraying.

Then, the layer of the ceramic particles 5 is formed on the outer circumferential surface of the foundation layer 3 in the ceramic spraying step. In order to obtain high-strength film, it is preferable that only the ceramic material is thermally sprayed without mixing other materials. The grain diameter of the thermally sprayed material is about 10 to 200 µ m. Although the thermal spraying can be performed by the well-known method such as the water-stabilized plasma spraying method and the gas plasma spraying method, it is preferable that the water-stabilized plasma spraying method is used in order to implement the strong bonding force of the ceramic particles. In addition, it is preferable that the thermally sprayed material has a relatively large grain diameter and the porosity of the ceramic particle layer is high so that the ceramic particle layer can be easily filled with a resin in the later resin impregnating step. The thickness of the thermally sprayed layer is about 0.5 to 3mm. In addition, it is preferable that the porosity of the ceramic particle layer before the resin impregnation is about 5 to 15%.

Then, the spaces among the ceramic particles 5 in the ceramic particle layer are impregnated with the thermosetting liquid resin 6 in the resin impregnating step. The impregnating method of the liquid resin includes coating, brushing and spraying means, and the thermally sprayed film can be impregnated with the liquid resin by that means. At this time, it is preferable to select the resin having a low viscosity of 100cps to 200cps at a temperature between room temperature and a preheat temperature in order to impregnate the spaces of the ceramic particles 5 with the liquid resin 6 over the whole thickness from the surface of the ceramic particle layer to the surface of the foundation layer 3. When a resin that is hardened at the temperature between the room temperature and the preheat temperature is selected, the thermally sprayed film is impregnated insufficiently, which is no good.

Then, the whole roll is heated after the resin impregnation and the liquid resin 6 in the thermally sprayed film is hardened in the resin hardening step. The hardening step is preferably performed such that the whole roll is put in a heating furnace 7 and heated therein. It is preferable that the heating condition is at 80 to 120°C for 1 to 10 hours.

Finally, the surface of the roll is cut so as to have a predetermined dimension and ground to have a predetermined surface roughness, whereby the ceramic-resin composite roll is completed.

### [Working Example 1]

First, the surface of a cast iron roll core having a length of 5100mm, a surface length of 3400mm and a diameter of 550mm was cleaned and defatted and roughened by sandblasting. Then, a nickel-chrome alloy was thermally sprayed onto the surface of the roll core by an arc spraying equipment, whereby a foundation layer having a thickness of 0.5mm was formed. Then, while the roll core having the foundation layer was rotated, alumina-titania (Al₂O₃-13%TiO₂) powder having an average grain diameter of 35 µm was thermally sprayed by a water-stabilized plasma spraying equipment, whereby a thermally sprayed ceramic film having a thickness of 1.2mm and a porosity of 8% was formed.

Then, the thermally sprayed ceramic roll was preheated to 70°C and a liquid epoxy resin raw material that was preheated to 70°C was applied from the surface of the roll so that the roll was impregnated with it. The used epoxy resin raw material was a mixed solution of 100 parts by mass of Araldite (produced by VANTICO AG) as a main agent and 32 parts by mass of HY932 (produced by VANTICO AG) as a hardening agent. The viscosity of this epoxy resin raw material liquid was 100 to 200cps.

Then, the thermally sprayed ceramic roll impregnated with the epoxy resin row material liquid was put in a heating furnace and the epoxy resin was hardened at 110°C for four hours, whereby a ceramic-epoxy resin composite layer was formed.

Then, the surface of the ceramic-resin composite layer was cut so as to have a thickness of 1.0mm, and finally ground to have an arithmetic average roughness (Ra) defined by JIS-B0601 of 1.0 µm, whereby a ceramic-resin composite roll having a roll outer diameter of 553mm was provided.

### [Comparative Example 1]

The same process as the working example 1 was performed until the ceramic spraying step. Then, a thermally sprayed ceramic roll was preheated to 70°C and a liquid epoxy resin raw material that was preheated to 70°C was applied from the surface of the roll so that the roll was impregnated with it. In this case, the used epoxy resin raw material was a mixed solution of 100 parts by mass of Pelnox 106 (produced by Japan Pelnox Corporation) as a main agent and 80 parts by mass of Pelcure HV19 (produced by Japan Pelnox Corporation) as a hardening agent and 4 parts by mass of DY-070 (produced by VANTICO AG) as a reaction promoting agent. The viscosity of this epoxy resin raw material liquid was 100 to 200cps.

Then, the thermally sprayed ceramic roll impregnated with the epoxy resin row material liquid was left as it was without being put in the heating furnace and the epoxy resin was hardened at the preheat temperature for four hours, whereby a ceramic-epoxy resin composite layer was formed. Other process was the same as that of the working example 1.

### [Comparative Example 2]

The same process as the working example 1 was performed until the ceramic spraying step. Meanwhile, in this case, the resin impregnating step and the hardening step were not performed. The surface was cut and ground similar to the working example 1, whereby a ceramic roll having a layer formed of only ceramic was provided.

### [Evaluation]

Comparative test was performed on each roll of the working example 1, the comparative example 2 and the comparative example 2 in the following method to evaluate impact resistance, abrasion resistance, chemical resistance and corrosion resistance. The result of each test is shown in Table 1.

### <Resin impregnation depth>

Water was dropped on the roll surface. According to the roll of the comparative example 2 that was not impregnated with the resin, the water penetrated the roll surface. Meanwhile, according to the rolls of the working example 1 and the comparative example 1, the water did not penetrate and a sealing effect was provided due to the resin impregnation. In addition, the roll surfaces of the working example 1 and the comparative example 1 were ground gradually, and water was dropped similarly. According to the roll of the comparative example 1, the water penetrated when the surface was ground by about 0.3mm and it was found that only the roll surface was impregnated with the resin. Meanwhile, according to the roll of the working example 1, the water did not penetrate even after the roll was ground to reach the foundation layer and it was found that the roll was sufficiently impregnated with the resin to the foundation layer.

### <Impact resistance>

Equotip hardness (ASTM standard : A956-96) was measured by an Equotip 2-E type impact equipment (produced by PROCEQ SA).

### <Abrasion resistance>

A blast material was sprayed to the roll surface and a time required to remove the ceramic layer was measured.

### <Chemical resistance and corrosion resistance>

As an alkali resistance test, a sodium hydroxide solution (pH = 12) was stayed on the roll surface for four days and the Equotip hardness was measured.

In addition, as an acid resistance test, aluminum sulfate solution (pH = 5) was stayed on the roll surface for five days and the Equotip hardness was measured.

As a result, it has been found that the roll according to the working example 1 is superior in impact resistance, abrasion resistance, chemical resistance and corrosion resistance as compared with the rolls according to the comparative examples 1 and 2.

**[Table 1]**

| | WORKING EXAMPLE 1 | COMPARATIVE EXAMPLE 1 | COMPARATIVE EXAMPLE 2 |
|---|---|---|---|
| RESIN IMPREGNATION DEPTH (MM) | 1 | 0.3 | - |
| EQUOTIP HARDNESS | 776 | 747 | 711 |
| BLAST TEST (SEC) | 10 | 7 | 3 |
| EQUOTIP HARDNESS (AFTER DIPPED IN ALKALI) | 747 | 706 | 615 |
| EQUOTIP HARDNESS (AFTER DIPPED IN ACID) | 764 | 720 | 653 |

### INDUSTRIAL APPLICABILITY

The ceramic-resin composite roll according to the present invention is superior in impact resistance, abrasion resistance, chemical resistance and corrosion resistance, so that it can be advantageously used as rolls for various kinds of industries, especially as a paper making roll.

## Claims

1. A ceramic-resin composite roll (1) comprising:
a metal roll core (2);
a foundation layer (3) formed on the outer circumferential surface of said metal roll core (2); and
a thermally sprayed ceramic film (4) formed on the outer circumferential surface of said foundation layer (3), wherein
said thermally sprayed ceramic film (4) includes:
a ceramic particle layer in which adjacent ceramic particles (5) are fused and bonded to each other; **characterized by**
a resin layer (6) penetrating into the spaces among the ceramic particles (5) from the surface of said ceramic particle layer to the surface of said foundation layer (3).

2. The ceramic-resin composite roll (1) according to claim 1, wherein
the resin forming said resin layer (6) is a thermosetting resin.

3. The ceramic-resin composite roll (1) according to claim 1, wherein
the resin forming said resin layer (6) is an epoxy resin.

4. A production method of a ceramic-resin composite roll (1) comprising:
a foundation layer forming step (A) of forming a foundation layer (3) on the outer circumferential surface of a metal roll core (2);
a ceramic spraying step (B) of thermally spraying ceramic particles (5) on the outer circumferential surface of said foundation layer (3) to form a ceramic particle layer in which adjacent ceramic particles (5) are fused and bonded to each other;
a resin impregnating step (C) of impregnating spaces among the ceramic particles (5) of said ceramic particle layer with a thermosetting liquid resin; and
a resin hardening step (D) of hardening said liquid resin by heating the whole roll after said resin impregnating step; **characterized in that**
said thermosetting liquid resin penetrates into the spaces among the ceramic particles (5) from the surface of said ceramic particle layer to the surface of said foundation layer.

5. The production method of the ceramic-resin composite roll (1) according to claim 4. wherein
said ceramic particles (5) are thermally sprayed by a water-stabilized plasma spraying method.

6. The production method of the ceramic-resin composite roll (1) according to claim 4, wherein
said resin hardening step (D) is performed in a heating furnace.

## Patentansprüche

1. Keramik-Harz-Verbundrolle (1) mit:
einem metallischen Rollenkern (2);
einer Grundschicht (3) ausgebildet auf der äußeren Umfangsfläche des metallischen Rollenkerns (2); und
einem thermisch aufgespritzten Keramikfilm (4) ausgebildet auf der äußeren Umfangsfläche der Grundschicht (3), wobei
der thermisch aufgespritzte Keramikfilm (4) aufweist:
eine Keramikpartikelschicht, in der benachbarte Keramikpartikel (5) verschmolzen und miteinander verbunden sind; **gekennzeichnet durch**
eine Harzschicht (6), die die Zwischenräume zwischen den Keramikpartikeln (5) von der Oberfläche der Keramikpartikelschicht bis zur Oberfläche der Grundschicht (3) durchdringt.

2. Die Keramik-Harz-Verbundrolle (1) nach Anspruch 1, wobei das Harz, das die Harzschicht (6) bildet, ein wärmehärtendes Harz ist.

3. Die Keramik-Harz-Verbundrolle (1) nach Anspruch 1, wobei das Harz, das die Harzschicht (6) bildet, ein Epoxidharz ist.

4. Ein Herstellungsverfahren für eine Keramik-Harz-Verbundrolle (1) mit:
einem Schritt (A) zur Bildung einer Grundschicht, in dem eine Grundschicht (3) auf der äußeren Umfangsfläche eines metallischen Rollenkerns (2) gebildet wird;
einem Keramik-Spritzschritt (B), in dem Keramikpartikel (5) auf die äußere Umfangsfläche der Grundschicht (3) zur Bildung eine Keramikpartikelschicht, in der benachbarte Keramikpartikel (5) verschmolzen und miteinander verbunden sind, gespritzt werden;
einem Harz-Imprägnierschritt (C), in dem Zwischenräume zwischen den Keramikpartikeln (5) der Keramikpartikelschicht mit einem wärmehärtenden, flüssigen Harz imprägniert werden; und
einem Harz-Härtungsschritt (D), in dem das flüssige Harz gehärtet wird durch Erwärmen der ganzen Rolle nach dem Harz-Imprägnierschritt; **dadurch gekennzeichnet, dass**
das wärmehärtende, flüssige Harz in die Zwischenräume zwischen den Keramikpartikeln (5) von der Oberfläche der Keramikpartikelschicht bis zur Oberfläche der Grundschicht (3) eindringt.

5. Das Herstellungsverfahren der Keramik-Harz-Verbundrolle (1) nach Anspruch 4, wobei
die Keramikpartikel (5) thermisch mit einem wasser-stabilisierten Plasmaspritzverfahren aufgesprüht werden.

6. Das Herstellungsverfahren der Keramik-Harz-Verbundrolle (1) nach Anspruch 4, wobei
der Harz-Härtungsschritt (D) in einem Wärmebehandlungsofen durchgeführt wird.

## Revendications

1. Rouleau constitué d'un composite céramique-résine (1), comprenant :
un noyau métallique de rouleau (2) ;
une couche d'assise (3) constituée sur la surface circonférentielle extérieure dudit noyau métallique de rouleau (2) ; et
un film de céramique pulvérisé par procédé thermique (4) formé sur la surface circonférentielle de ladite couche d'assise (3), dans lequel
ledit film de céramique pulvérisé par procédé thermique (4) inclut :
une couche de particules de céramique dans laquelle sont fusionnées et collées les unes avec les autres des particules adjacentes de céramique (5) ; **caractérisé par**
une couche de résine (6) pénétrant dans les espaces des particules de céramique (5) entre la surface de ladite couche de particules de céramique et la surface de ladite couche d'assise (3).

2. Rouleau constitué d'un composite céramique-résine (1) selon la revendication 1, dans lequel
la résine constituant ladite couche de résine (6) est une résine thermodurcissable.

3. Rouleau constitué d'un composite céramique-résine (1) selon la revendication 1, dans lequel
la résine constituant ladite couche de résine (6) est une résine époxy.

4. Procédé de production d'un rouleau constitué d'un composite céramique-résine (1) comportant :
une étape de formation d'une couche d'assise (A) consistant à former une couche d'assise (3) sur la surface circonférentielle extérieure d'un noyau métallique de rouleau (2) ;
une étape de pulvérisation de céramique (B) consistant à pulvériser par procédé thermique des particules de céramique (5) sur la surface circonférentielle extérieure de ladite couche d'assise (3) pour former une couche de particules de céramique dans laquelle sont fusionnées et collées les unes avec les autres des particules adjacentes de céramique (5) ;
une étape d'imprégnation de résine (C) consistant à imprégner des espaces entre les particules de céramique (5) de ladite couche de particules de céramique au moyen d'une résine liquide thermodurcissable ; et
une étape de durcissement de résine (D) consistant à durcir ladite résine liquide en chauffant l'intégralité du rouleau après ladite étape d'imprégnation de résine ; **caractérisé en ce que**
ladite résine liquide thermodurcissable pénètre dans les espaces des particules de céramique (5) entre la surface de ladite couche de particules de céramique et la surface de ladite couche d'assise.

5. Procédé de production du rouleau constitué d'un composite céramique-résine (1) selon la revendication 4, dans lequel
lesdites particules de céramique (5) sont pulvérisées par un procédé thermique utilisant un procédé de pulvérisation au plasma stabilisé par de l'eau.

6. Procédé de production du rouleau constitué d'un composite céramique-résine (1) selon la revendication 4, dans lequel
ladite étape de durcissement de résine (D) est effectuée dans un four de chauffage.
